# FASCICULE DE BREVET EUROPEEN

(11) **EP 3 580 486 B1**
(45) Date de publication et mention de la délivrance du brevet: **22.09.2021**
(21) Numéro de dépôt: 18707087.5
(22) Date de dépôt: 06.02.2018
(51) Int. Cl.: F16L 21/00, F16L 21/06, F16L 21/08

(54) **DISPOSITIF POUR L'ACCOUPLEMENT DE DEUX TUBES AVEC PRÉ-MONTAGE**
VORRICHTUNG ZUM VERBINDEN ZWEIER ROHRE MIT VORMONTAGE
DEVICE FOR COUPLING TWO TUBES WITH PRE-ASSEMBLY

(30) Priorité: 07.02.2017 FR 1751002
(43) Date de publication de la demande: 18.12.2019
(73) Titulaire: Caillau, 92130 Issy-les-Moulineaux (FR)
(72) Inventeur: RIGOLLET, Nicolas, 41200 Romorantin (FR); PREVOT, Fabrice, 41130 Selles sur Cher (FR)
(74) Mandataire: Cabinet Beau de Loménie
(86) Numéro de dépôt international: PCT/FR2018/050285
(87) Numéro de publication internationale: WO 2018/146409

(56) Documents cités:
- US-A- 4 380 348
- US-A1- 2005 189 768
- US-A1- 2005 264 012
- US-A1- 2011 215 574

## Description

Le présent exposé concerne un dispositif d'accouplement pour l'accouplement étanche de deux tubes alignés ayant sensiblement le même diamètre, le dispositif comprenant un manchon d'étanchéité susceptible d'être disposé autour des extrémités en regard des deux tubes, et un manchon de serrage dans lequel s'étend le manchon d'étanchéité.

Un dispositif de ce type est connu, par exemple par les demandes de brevet WO 00/75548 et WO 2006/109002.

Ce dispositif connu donne satisfaction en matière de serrage et d'étanchéité. Cependant, du point de vue de la praticité, il peut être intéressant de pouvoir pré-monter le dispositif sur au moins l'un des tubes de manière à faciliter l'assemblage et de s'assurer du correct positionnement du dispositif par rapport au tube avant de procéder au serrage.

Le document US 7,458,619 propose une solution permettant un tel pré-montage, selon laquelle l'un des tubes présente un bouton en saillie, tandis que le manchon de serrage porte une patte avec une ouverture dans laquelle on vient engager le bouton du tube avant de procéder au serrage.

Ce système présente l'inconvénient de nécessiter l'ajout de deux éléments externes, à savoir le bouton sur le tube et la patte sur le manchon de serrage. Il faut d'une part fixer correctement ces éléments aux pièces qui les portent. D'autre part, dans la mesure où ces éléments sont tous les deux accessibles depuis l'extérieur, il existe toujours un risque qu'ils se désolidarisent de la pièce qui les porte car ils sont directement exposés aux chocs. En particulier, la patte pourvue de l'ouverture risque de se déplacer ou de se désolidariser du manchon de serrage.

Le document US 2005/0264012 et le document US 2005/189768 divulguent un dispositif selon le préambule de la revendication 1.

Le présent exposé vise à proposer un dispositif améliorant cet état de la technique et surmontant en tout ou partie les inconvénients précités.

Ainsi, le présent exposé concerne un dispositif d'accouplement pour l'accouplement étanche de deux tubes alignés, le dispositif comprenant un manchon d'étanchéité susceptible d'être disposé autour des extrémités en regard des deux tubes, et un manchon de serrage dans lequel s'étend le manchon d'étanchéité, dans lequel l'un des éléments comprenant le manchon d'étanchéité et le manchon de serrage présente au moins un organe de retenue apte à coopérer en retenue axiale à l'intérieur du manchon de serrage avec une surface de retenue de l'un des tubes recouverte par le manchon de serrage ; l'organe de retenue présente une surface de came apte à coopérer avec la surface de retenue lors d'un mouvement relatif de rotation entre le tube qui présente ladite surface de retenue et ledit un des éléments qui présente l'organe de retenue, dans un sens tendant au désengagement de la retenue axiale.

Ainsi, le pré-montage s'effectue par l'intérieur du dispositif d'accouplement, en mettant en œuvre la surface de retenue du tube, et l'organe de retenue qui équipe le manchon d'étanchéité ou le manchon de serrage, cette surface de retenue et cet organe de retenue étant "protégés" par le manchon de serrage qui les recouvre en situation de pré-montage.

Par une rotation relative entre le tube qui présente la surface de retenue et le dispositif d'accouplement, la coopération entre l'organe de retenue et la surface de retenue peut être désengagée, permettant de séparer le dispositif et le tube, par exemple pour réaliser un démontage après desserrage du manchon de serrage.

Optionnellement, le manchon d'étanchéité présente deux agencements d'étanchéité espacés axialement, et l'organe de retenue est disposé axialement entre les deux agencements d'étanchéité.

Optionnellement, l'organe de retenue est porté par le manchon d'étanchéité et est situé dans une zone dudit manchon d'étanchéité qui est recouverte par le manchon de serrage ; optionnellement l'organe de retenue est formé en une seule pièce avec ledit manchon d'étanchéité.

Optionnellement, l'organe de retenue est rapporté à l'intérieur du manchon de serrage et traverse une fenêtre du manchon d'étanchéité.

Optionnellement, l'organe de retenue comprend un ergot qui s'étend à l'intérieur dudit manchon d'étanchéité. Dans ce cas, cet ergot présente optionnellement une surface axialement convexe.

Optionnellement, le manchon d'étanchéité présente au moins une patte interne, décalée radialement vers l'intérieur par rapport à une paroi du manchon d'étanchéité en délimitant avec ladite paroi un espacement radial.

Optionnellement, la patte interne porte un ergot de retenue en saillie vers l'extérieur, ledit ergot de retenue étant optionnellement découpé dans la patte interne.

Optionnellement, la patte interne est découpée dans une paroi du manchon d'étanchéité et repliée vers l'intérieur.

Optionnellement, le dispositif présente au moins une surface de butée pour l'extrémité de l'un des tubes.

Optionnellement, la surface de butée est formée à la base de la patte interne opposée à son extrémité libre.

Optionnellement, le dispositif comporte un repère externe révélateur de la position de l'organe de retenue.

Optionnellement, ledit élément qui présente l'organe de retenue présente deux organes de retenue espacés axialement.

Optionnellement, le manchon d'étanchéité est de type ouvert et présente deux extrémités en regard reliées entre elles via deux agencements d'étanchéité espacés axialement.

Optionnellement, chacun des deux agencements d'étanchéité comprend deux surfaces de contact, respectivement situées sur le bord d'une languette et sur le bord d'une encoche.

L'exposé concerne également un ensemble d'accouplement de tubes, comprenant un dispositif d'accouplement du type décrit dans le présent exposé, et au moins un premier tube destiné à être aligné avec un deuxième tube pour être accouplé avec lui par le dispositif d'accouplement, et dans lequel le premier tube présente une surface de retenue apte à coopérer avec l'organe de retenue à l'intérieur du manchon de serrage.

Optionnellement, la surface de retenue est formée sur un bord d'un renfoncement formé en creux sur la surface interne du premier tube, ou sur un bord d'un perçage du premier tube.

Optionnellement, dans le cas où le manchon d'étanchéité présente au moins une patte interne, décalée radialement vers l'intérieur par rapport à une paroi du manchon d'étanchéité en délimitant avec ladite paroi un espacement radial, l'épaisseur du premier tube est reçue dans ledit espacement radial.

Optionnellement, l'organe de retenue est formé au bord d'un perçage du manchon d'étanchéité et la surface de retenue est formée en saillie sur la surface externe du premier tube.

Optionnellement, ledit élément qui présente l'organe de retenue présente deux organes de retenue espacés axialement, et les premier et deuxième tubes présentent chacun une surface de retenue apte à coopérer respectivement avec l'un des organes de retenue.

Optionnellement, au moins l'un des premier et deuxième tubes présente un repère externe révélateur de la position de la surface de retenue.

Avec le dispositif selon le présent exposé, le pré-montage sur au moins l'un des tubes est aisé, et les moyens mis en oeuvre sont protégés par le manchon de serrage. De plus, selon certains aspects, l'organe de retenue et/ou la surface de retenue peuvent être réalisés en une seule pièce avec les éléments (manchon d'étanchéité ou de serrage, ou bien tube) qui les portent, de sorte qu'aucun risque de désolidarisation n'existe. Dans tous les cas, même si l'organe de retenue et/ou la surface de retenue sont formés sur des éléments rapportés, le fait que ceux-ci soient protégés du côté externe par le manchon de serrage évite des risques de rupture ou d'endommagement.

Le dispositif mettant en œuvre la coopération entre l'organe de retenue et la surface de retenue peut servir non seulement à opérer une retenue axiale du dispositif par rapport à au moins l'un des tubes, permettant un pré-montage, mais également un calage vérifiant le positionnement correct relatif entre le tube en question et le dispositif.

Si l'on souhaite pouvoir réaliser un démontage sans outils, on peut, comme indiqué, faire en sorte que l'organe de retenue présente une surface de came permettant un pré-montage après déplacement angulaire relatif entre le dispositif et le tube équipé de la surface de retenue. Cette surface de came peut prendre la forme d'un ergot à surface axialement convexe.

Selon certains aspects, l'organe de retenue peut être réalisé par de simples opérations de pliage et découpage pouvant être effectuées très rapidement, avec des outils simples et donc des coûts très faibles.

Selon certains aspects, le dispositif présente deux organes de retenue espacés axialement. Ceci peut, d'une part, permettre une réversibilité, en permettant de placer le dispositif dans un sens ou dans l'autre avec le tube équipé de la surface de retenue, pour faire coopérer l'un ou l'autre des deux organes de retenue avec cette surface. Cette faculté peut être intéressante pour positionner les moyens de serrage du manchon de serrage de manière qu'ils soient le plus aisément accessibles, en fonction de l'environnement du dispositif monté sur les tubes. Par ailleurs, ceci peut permettre de pré-monter le dispositif sur les deux tubes en faisant coopérer chacun des deux organes de retenue avec deux surfaces de retenue respectivement portées par chacun des deux tubes.

Le présent exposé sera mieux compris à la lecture de la description détaillée qui suit, d'exemples de réalisation du dispositif d'accouplement illustrés par les figures annexées sur lesquelles :
- la figure 1 est une vue en perspective d'un ensemble d'accouplement de deux tubes selon le présent exposé, comprenant un dispositif d'accouplement servant à l'accouplement des deux tubes ;
- la figure 2 est une vue en perspective éclatée des divers éléments représentés sur la figure 1 ;
- la figure 3 est une vue en perspective du manchon d'étanchéité, coupée dans un plan III comprenant l'axe du manchon et un diamètre de ce dernier, permettant de visualiser l'intérieur du manchon d'étanchéité ;
- la figure 4 est une vue partielle en perspective du dispositif d'accouplement assemblant deux tubes, également coupée dans un plan comprenant la direction axiale du manchon d'étanchéité, et montrant l'intérieur des tubes coopérant avec ce manchon ;
- la figure 5 montre une variante pour le manchon d'étanchéité, également selon une vue en perspective avec un arrachement dans un plan comprenant la direction axiale du manchon ;
- la figure 6 montre l'intérieur du manchon d'étanchéité selon la direction VI de la figure 5 ;
- la figure 7 montre, pour une autre variante de réalisation, le manchon d'étanchéité et les extrémités des deux tubes, avant leur assemblage avec ce manchon ;
- la figure 8 montre les tubes assemblés avec le manchon d'étanchéité, dans une coupe dans un plan comprenant l'axe de ce manchon ; et
- la figure 9 montre, pour une autre variante de réalisation, des vues en perspective partielles, coupées dans un plan comprenant l'axe du dispositif, montrant partiellement le manchon de serrage, le manchon d'étanchéité et les deux tubes.

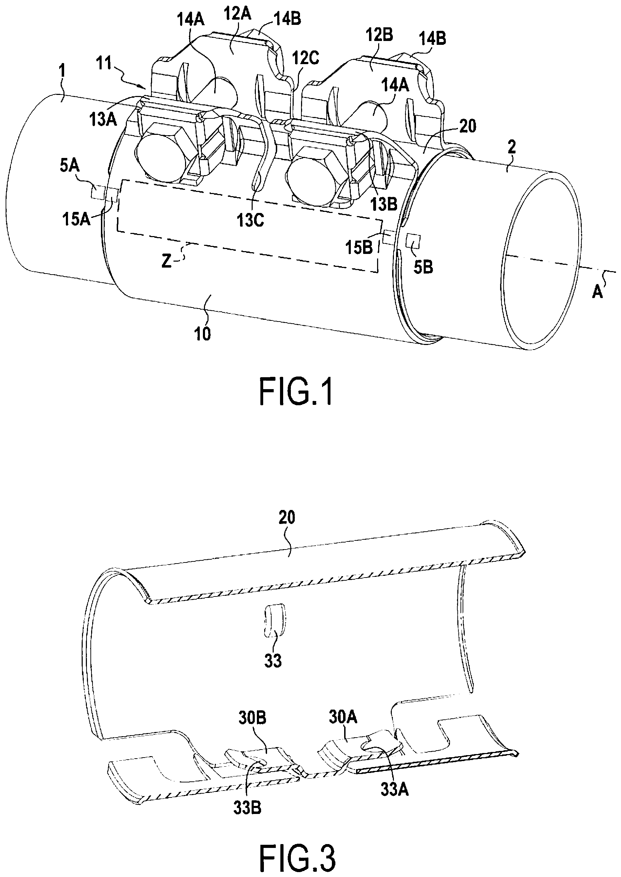

La figure 1 montre les extrémités de deux tubes 1 et 2 qui sont alignées selon leur axe commun A, qui est également l'axe général du dispositif et, en particulier, de ses manchons de serrage et d'étanchéité. Ces deux tubes ont sensiblement le même diamètre et sont accouplés à l'aide d'un dispositif d'accouplement, qui comprend un manchon de serrage 10, ainsi qu'un manchon d'étanchéité 20, situé à l'intérieur du manchon de serrage 10. Comme décrit par exemple par la demande WO 00/75548, le manchon d'étanchéité est fendu axialement et présente donc une fente axiale 11 délimitée par des lèvres d'assemblage relevées radialement. Pour réaliser le serrage, les lèvres d'assemblage en regard peuvent être rapprochées par des moyens de serrage, en particulier une vis coopérant avec un écrou. En l'espèce, étant donné la longueur axiale du manchon, deux ensembles de serrage sont prévus. Ainsi, la première lèvre d'assemblage comprend deux oreilles redressées 12A et 12B, séparées par une fente 12C qui les dissocie l'une de l'autre lors de leur approchement sous l'effet du serrage, tandis que la lèvre opposée comprend également deux oreilles redressées, respectivement 13A et 13B, séparées par une fente 13C. Pour chaque paire de deux oreilles en vis-à-vis, le moyen de serrage comprend une vis 14A dont la tête est retenue par rapport à l'une des oreilles, et un écrou 14B retenu par rapport à l'autre oreille.

Ainsi, le manchon de serrage est globalement analogue à celui que divulgue le document WO 2006/109002.

Comme indiqué, le manchon d'étanchéité est disposé à l'intérieur du manchon de serrage.

Ce manchon d'étanchéité peut également se rapprocher de celui que divulgue le document WO 2006/109002, en ce qu'il est réalisé sous la forme d'un manchon ouvert axialement selon une fente axiale 21, ses extrémités en regard qui délimitent cette fente étant pourvues d'agencements d'étanchéité. Ces agencements d'étanchéité peuvent par exemple être réalisés comme ceux que divulgue le document WO 00/75548 ou comme ceux que divulgue le document WO 2006/109002. En l'espèce, les extrémités en regard du manchon d'étanchéité 20 comprennent une languette 22 et une encoche 23 qui est délimitée entre deux pattes, respectivement 24 et 24'. On comprend que lors du serrage du manchon de serrage, le diamètre du manchon d'étanchéité diminue, ce qui fait avancer la languette 22 dans l'encoche 23, un contact étanche s'opérant alors entre des surfaces de contact formées sur les bords latéraux 22A et 22B de la languette 22 et, respectivement, des surfaces de contact formées sur chacune des pattes 24 et 24'. Ainsi, deux agencements d'étanchéité sont réalisés, ces agencements étant espacés axialement et comprenant respectivement les surfaces en contact du bord 22A de la languette et de la patte 24 et les surfaces en contact du bord 22B de la languette et de la patte 24'. Dans l'exemple représenté, les dégagements 25 et 25' sont respectivement formés sur les côtés des pattes 24 et 24' opposés à leurs languettes respectives, pour favoriser le pliage de ces pattes et favoriser le contact étanche, comme décrit dans le document WO 2006/109002.

Lorsqu'il est disposé à l'intérieur du manchon de serrage 10, le manchon d'étanchéité 20 est calé radialement et axialement par rapport à lui. En l'occurrence, le manchon d'étanchéité présente deux projections 26 situées sur sa périphérie externe, venant s'encastrer dans des cuvettes formés du côté interne de bossages 16 que présente le manchon de serrage 10.

Le dispositif d'accouplement est équipé de moyens de pré-montage sur les tubes 1 et 2. En l'occurrence, chacun de ces tubes présente une ouverture, respectivement 1A et 2A, proche de son extrémité qui est tournée vers l'autre tube. Il s'agit en l'espèce d'ouvertures circulaires dont le bord avant, respectivement 1'A et 2'A forme une surface de retenue. Au sens du présent exposé, le bord avant est celui qui est le plus proche de l'extrémité du tube faisant face à l'autre tube.

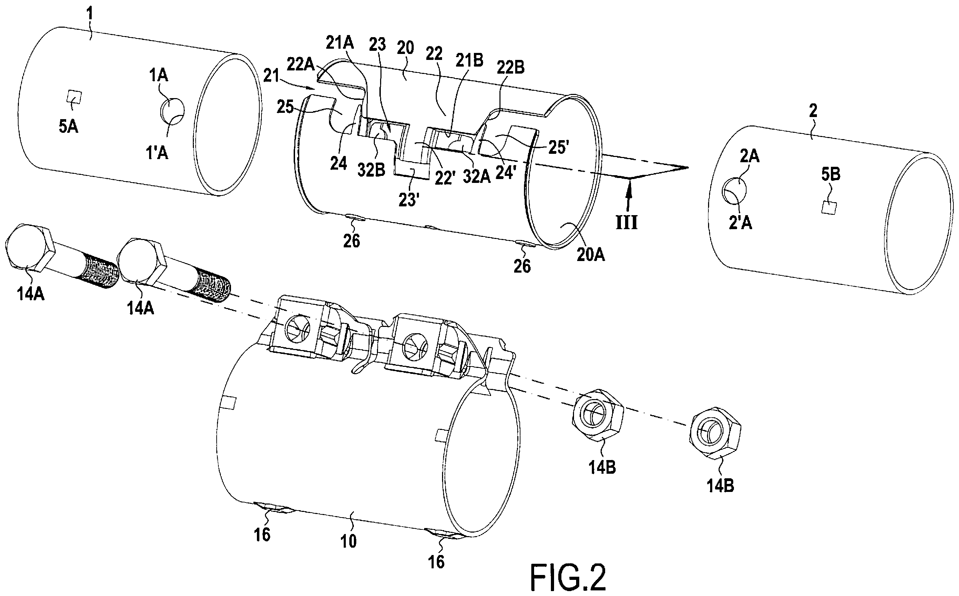

De son côté, le manchon d'étanchéité présente deux organes de retenue pour coopérer respectivement avec les bords de retenue 1'A et 2'A des tubes 1 et 2. Plus précisément, comme on le voit mieux sur les figures 2 à 4, le manchon d'étanchéité 20 présente deux pattes internes, respectivement 30A et 30B pourvues chacune d'un ergot de retenue, respectivement 32A et 32B, en saillie vers l'extérieur.

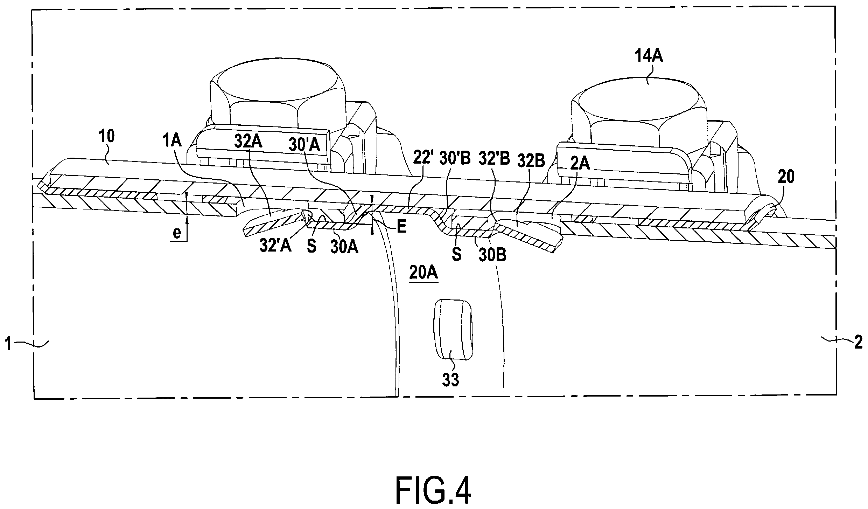

En l'occurrence, on voit en particulier sur la figure 4 que les pattes internes sont décalées radialement vers l'intérieur par rapport à la paroi périphérique interne 20A du manchon d'étanchéité. Cette paroi périphérique interne définit une surface cylindrique adaptée à la surface cylindrique externe des tubes, ces derniers venant s'emmancher dans le manchon d'étanchéité. On voit sur la figure 4, qu'un espacement radial E est délimité entre la surface périphérique externe S des pattes internes 30A et 30B, et la paroi périphérique interne du manchon. Cet espace radial E est adapté à l'épaisseur e des tubes. On voit sur la figure 4 que les tubes 1 et 2 viennent s'insérer sous les pattes 30A et 30B, c'est-à-dire entre respectivement, la patte 30A ou 30B et la paroi périphérique interne 20A du manchon d'étanchéité 20.

Cependant, les ergots 32A et 32B font saillie vers l'extérieur sur la surface périphérique externe S des pattes. Comme on le voit sur la figure 4, lorsque les tubes sont emmanchés en position pré-montée, les ergots 32A et 32B font respectivement saillie dans les perçages 1A et 1B des tubes 1 et 2. Les ergots 32A et 32B sont formés par des languettes respectivement découpées dans les pattes 30A et 30B, et légèrement pliées pour que leurs extrémités libres fassent saillie radialement vers l'extérieur par rapport à la surface périphérique externe S des pattes 30A et 30B.

On voit en particulier sur la figure 3 que les découpes, respectivement 33A et 33B, qui servent à ainsi former les ergots 32A et 32B ont des formes en demi-cercle. Ainsi, les ergots 32A et 32B ont des surfaces axialement convexes. Ceci signifie que, en projection sur un plan comprenant la direction axiale A et une direction perpendiculaire à l'axe A passant par l'ergot, celui-ci définit une forme convexe. En l'espèce, comme indiqué, les découpes ont des formes en demi-cercle. Bien entendu, d'autres formes seraient adaptées, en particulier les formes en ellipse en parabole ou en analogue. De leur côté, les surfaces de retenue 1'A et 2'A sont des surfaces axialement concaves. En l'espace, comme indiqué, ces surfaces sont formées par les bords avant des perçages 1A et 2A des tubes qui sont circulaires ou elliptiques. Il en résulte que la coopération entre les organes de retenue formés par les ergots et les surfaces de retenue s'apparente à une coopération de cames. En effet, les surfaces axialement convexes des ergots formant les organes de retenue forment des surfaces de came qui, lors d'un mouvement relatif de rotation autour de l'axe A entre les tubes et le manchon d'étanchéité 20 aura tendance à ramener élastiquement les ergots vers l'axe A en permettant aux surfaces de retenue 1'A et 2'A formées par les bords des perçages 1A et 1B d'échapper à ces ergots, de manière à permettre le désengagement des tubes par rapport au manchon d'étanchéité.

Dans la mesure où, comme indiqué précédemment, le manchon d'étanchéité est calé radialement par rapport au manchon de serrage, en l'espèce grâce aux ergots 26 entrant dans les cuvettes formées du côté interne des bossages 16, on comprend qu'il est possible de démonter le dispositif en maintenant le manchon de serrage et en faisant tourner chacun des tubes par rapport à lui.

En l'espèce, les pattes internes 30A et 30B sont formées vers l'extrémité libre de la languette 22 qui délimite la fente axiale 21 du manchon d'étanchéité 20. Plus précisément, on voit sur la figure 2 que cette languette présente un prolongement 22' qui s'étend dans le sens circonférentiel en restant sur le diamètre nominal du manchon d'étanchéité. Ce diamètre nominal est le diamètre du cylindre globalement formé par le manchon. On voit sur la figure 2 que le fond de l'encoche 23 délimitée entre les pattes 24 et 24' d'étanchéité présente un renfoncement 23' adapté pour recevoir le prolongement 22' de la languette 22.

De part et d'autre de ce prolongement 22' sont réalisées des découpes 21A et 21B qui s'étendent parallèlement à l'axe A du manchon. Ces découpes délimitent le bord libre de la languette 22 et les pattes internes 30A et 30B. Ainsi, ces pattes s'étendent au-delà de la languette, de l'autre côté des découpes 21A et 21B. Chaque patte interne s'étend globalement axialement. Les pattes internes sont repliées vers l'intérieur et l'on voit sur la figure 4 que leur rattachement au prolongement 22' forme une marche vers l'intérieur, respectivement 30'A et 30'B, qui correspond à l'espacement radial E précité.

En d'autres termes, les pattes internes 30A et 30B sont découpées dans la paroi du manchon d'étanchéité et sont repliées vers l'intérieur. Les ergots 32A et 32B sont eux-mêmes découpés et repliés dans ces pattes internes. Ainsi, dans cet exemple, les organes de retenue (en l'espèce : les ergots 32A et 32B) sont formés en une seule pièce avec le manchon d'étanchéité.

Les marches 30'A et 30'B précitées forment des surfaces de butée pour les extrémités des tubes 1 et 2 lorsque ceux-ci sont emmanchés dans le manchon d'étanchéité 20. Ainsi, les surfaces de butée sont en l'espèce formées à la base des pattes internes 30A et 30B opposées à leur extrémité libre. On remarque également que la paroi interne du manchon d'étanchéité présente un bossage 33 situé globalement en son milieu. Selon sa largeur, ce bossage 33 peut également servir de surface de butée pour les tubes 1 et 2.

Dans l'exemple qui vient d'être décrit, le manchon d'étanchéité 20 présente deux organes de retenue, chacun pour coopérer avec l'un des tubes 1 et 2. Ceci permet de pré-monter le dispositif sur les deux tubes avant d'opérer le serrage et le raccordement étanche des deux tubes. Bien entendu, on peut prévoir que le dispositif ne comporte qu'un seul organe de retenue, par exemple, analogue à l'un des organes de retenue qui viennent d'être décrits, pour assurer le pré-montage sur seulement l'un des tubes.

Comme indiqué, le raccordement doit être étanche. Ainsi, comme il est décrit dans le document WO 2006/109002, la fente 21 du manchon d'étanchéité équipée des agencements d'étanchéité qui ont été décrits, se trouve dans une région pleine du manchon de serrage, éloignée de la fente de serrage 11 du manchon de serrage. Cette fente 21 est donc recouverte par ce manchon de serrage 10 et se trouve par exemple dans la zone Z indiquée sur la figure 1. Ainsi, toute la partie de l'encoche 23 qui se trouve entre les pattes 24 et 24' des agencements d'étanchéité est recouverte par le manchon de serrage 10 et, les deux manchons étant plaqués l'un contre l'autre, l'étanchéité est assurée. Les organes de retenue sont disposés axialement entre les deux agencements d'étanchéité réalisés par les surfaces de contact entre le bord 22A de la languette 20 et la patte 24, et entre le bord 22B de la languette 20 et la patte 24'. Ainsi, les ouvertures 1A et 2A des tubes 1 et 2 se trouvent également entre ces deux agencements d'étanchéité et les fuites entre les tubes sont donc emprisonnées dans le tronçon axial délimité respectivement par ces agencements. En conséquence, le pré-montage selon le présent exposé est sans impact négatif sur l'étanchéité du raccordement des deux tubes.

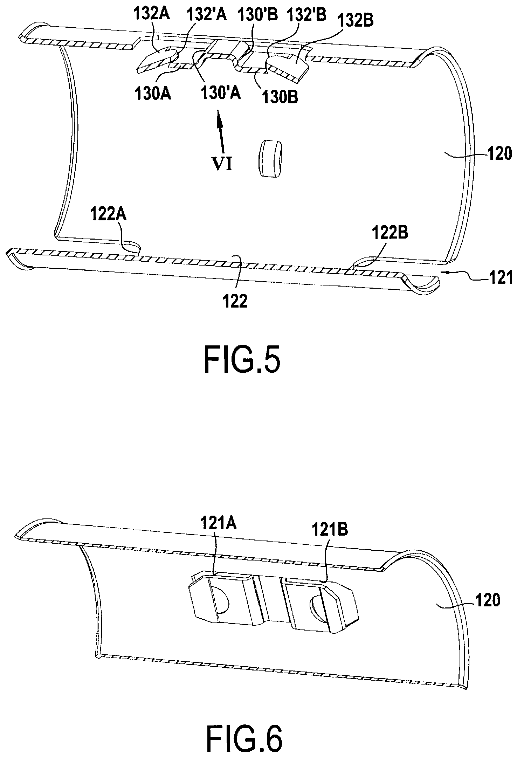

On décrit maintenant les figures 5 et 6 qui montrent une variante de réalisation. Cette variante se distingue de celle des figures 1 à 4 seulement par la conformation du manchon d'étanchéité qui est ici désignée par la référence 120. Pour ce manchon d'étanchéité 120, les agencements d'étanchéité sont analogues à ceux qui ont été décrits précédemment. Cependant, les organes de retenue sont cette fois disposés dans une région du manchon d'étanchéité qui est éloignée de la fente 121 de ce manchon. Sur la figure 5, on voit la languette d'étanchéité 122 qui délimite un des bords de cette fente. Les organes de retenue sont formés par des ergots 132A et 132B, eux-mêmes formés dans des pattes internes 130A et 130B, ces ergots présentent également axialement des surfaces convexes, formées par leur bord libre 132'A et 132'B correspondant à la forme par exemple semi-circulaire des découpes qui certes formaient ces ergots, lesquels prennent, comme dans le mode de réalisation précédent, la forme de languettes découpées et relevées. Les pattes internes 130A et 130B sont formées par des découpes 121A et 121B du manchon d'étanchéité 120 et sont repliées vers l'intérieur. Ainsi, ces pattes internes sont pratiquement identiques à celles de la variante des figures 1 à 4, à ceci près qu'elles sont formées dans une partie de la paroi du manchon 120 éloignée de sa fente axiale 121. On voit également les marches 130'A et 130'B formées à la base de ces pattes internes, pour former des surfaces de butée pour les tubes. Les ergots 132A et 132B sont disposés axialement entre les bords latéraux 122A et 122B de la languette d'étanchéité 122, de sorte que, comme pour la variante des figures 1 à 4, les organes de retenue sont disposés axialement entre les agencements d'étanchéité qui emprisonnent donc les fuites dans l'espace qu'ils délimitent axialement.

Dans les variantes qui viennent d'être décrites, la surface de retenue est formée sur le bord d'un perçage 1A ou 2A du tube 1 ou 2. Elle pourrait également être formée sur le bord d'un renfoncement formé en creux sur la surface interne du tube, dans lequel viendrait s'encastrer l'ergot de retenue.

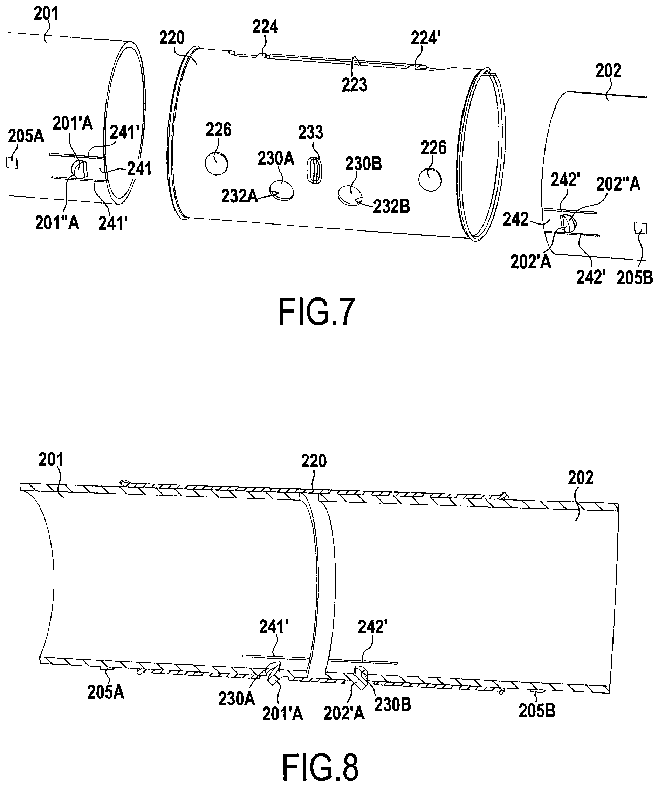

On décrit maintenant en référence aux figures 7 et 8 une variante dans laquelle c'est cette fois l'organe de retenue qui est formée au bord d'un perçage touchant l'étanchéité. Sur la figure 7, on voit les deux tubes 201 et 202 avant leur emmanchement dans le manchon d'étanchéité 220. Le manchon de serrage n'est pas représenté, mais il peut être identique au manchon de serrage 10 précédemment décrit. On comprend que le manchon d'étanchéité 220 présente une fente 221 avec des agencements d'étanchéité analogues à ceux décrits précédemment, et l'on voit en particulier les pattes 224 et 224' qui délimitent les bords de l'encoche 223. Le manchon d'étanchéité 220 présente par ailleurs des bossages 226 sur sa surface externe, analogues aux bossages 26 décrits en référence à la figure 2 pour permettre le calage axial et en rotation de ce manchon dans le manchon de serrage. On voit par ailleurs que le manchon d'étanchéité 220 présente deux perçages, respectivement 230A et 230B qui sont en l'espèce des perçages circulaires. Quant à eux, les tubes 201 et 202 présentent des ergots 201'A et 202'A qui, à l'état pré-monté visible sur la figure 8, viennent s'engager dans les perçages 230A et 230B du manchon d'étanchéité. Les ergots 201'A et 202'A font saillie radialement vers l'extérieur. Ils sont en l'espèce réalisés sous la forme de languettes découpées dans les tubes et présentant ainsi des bords, respectivement 201"A et 202"A qui sont axialement convexes et coopèrent avec les bords arrondis des ouvertures 230A et 230B. Ainsi, comme dans les variantes précédemment décrites, une rotation relative des tubes et du manchon d'étanchéité pourra permettre de faire cesser la coopération de retenue axiale entre les organes de retenue et les surfaces de retenue. En l'espèce, les ergots 201'A et 202'A sont formées sur des portions des tubes, respectivement 241 et 242, délimitées entre des fentes axiales, respectivement 241' et 242'. Ces fentes axiales débouchent sur les extrémités libres des tubes en regard. En quelque sorte, chaque ergot est formé sur la patte axiale 241 ou 242 délimitée par ces fentes axiales, cette patte axiale pouvant ainsi présenter une certaine élasticité en déformation radiale. Ceci permet, lors de l'emmanchement des tubes dans le manchon d'étanchéité 220, de rabattre les pattes axiales vers l'intérieur pour permettre l'avancement des ergots 201&A et 202'A dans le manchon d'étanchéité 220, jusqu'à ce que ces ergots s'encastrent dans les ouvertures 230A et 230B sous l'effet de l'élasticité des pattes axiales 241 et 242 précitées. Dans cet exemple, les organes de retenue sont formés par les bords arrière, respectivement 232A et 232B, des ouvertures 230A et 230B. La face interne du bossage 233 du manchon d'étanchéité peut servir de butée aux tubes.

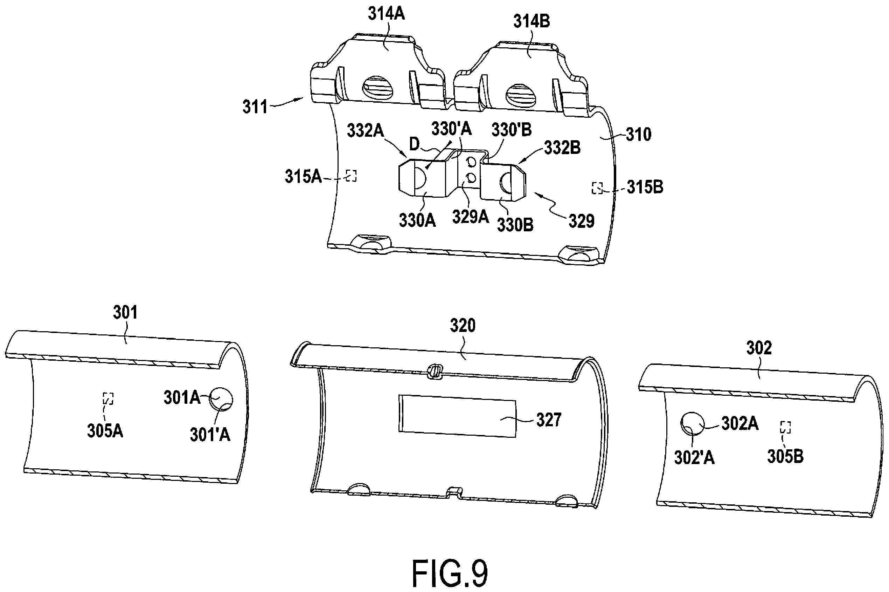

En référence à la figure 9, on décrit maintenant une autre variante dans laquelle les organes de retenue sont cette fois portés par le manchon de serrage 310. On a représenté sur cette figure le manchon de serrage 310, le manchon d'étanchéité 320 et les tubes 301 et 302 dans une vue partielle coupée dans un plan axial passant par la fente axiale 311 du manchon de serrage dont on voit les oreilles de serrage 314A et 314B ; en revanche, la fente axiale et les agencements d'étanchéité du manchon d'étanchéité 320 ne sont pas visibles sur la figure. Les tubes peuvent être identiques à ceux des figures 1 à 4 et présentent, comme eux, des ouvertures, respectivement 301A et 302A, dont les bords avant 301'A et 302'A forment des surfaces de retenues. Les organes de retenue sont similaires à ceux des variantes des figures 1 à 6 et sont donc réalisés sous la forme d'ergots, respectivement 332A et 332B formés par des languettes découpées dans des pattes internes, respectivement 330A et 330B. Cependant, ces pattes internes sont formées dans un élément de retenue 329 fixé sur la périphérie interne du manchon de serrage 310. Cet élément 329 présente une base 329A plaquée sur la surface interne du manchon de serrage et fixée à cette surface, par exemple par soudure ou par tout moyen approprié, les pattes internes étant pliées vers l'intérieur par rapport à cette base 329A.

Le manchon d'étanchéité présente une fenêtre 327 à travers laquelle passent les pattes internes 330A et 330B lorsque le manchon d'étanchéité est disposé à l'intérieur du manchon de serrage. La distance D entre la face externe des pattes internes et la périphérie interne du manchon de serrage 310 est sensiblement égale à la somme de l'espacement radial E précité en référence à la figure 4 et de l'épaisseur du manchon d'étanchéité 320. Ainsi, une fois que les pattes internes sont disposées dans la fenêtre 327, elles font saillie à l'intérieur du manchon d'étanchéité de la même manière que les pattes internes 30A et 30B ou 130A et 130B des variantes des figures 1 à 4 et 5 et 6. La mise en place des tubes pour le pré-montage s'effectue de la même manière que sur ces variantes, les tubes pouvant être insérés axialement à l'intérieur de l'ensemble des deux manchons assemblés l'un dans l'autre, cette insertion faisant s'effacer les ergots 332A et 332B jusqu'à ce qu'ils se trouvent dans les perçages 301A et 302A. Les pattes internes 330A et 330B sont reliées à la base 329A par des pliages formant des portions de parois sensiblement radiales 330'A et 330'B qui peuvent servir de surfaces de butées pour l'extrémité des tubes.

Evidemment, l'ensemble des moyens servant à la retenue des tubes, à savoir les organes de retenue, la fenêtre 327 et les perçages 301A et 302A se trouvent dans une région du manchon de serrage 310 fermée par la paroi de ce manchon, qui assure ainsi l'étanchéité dans cette zone. Par ailleurs, de même que sur les figures précédentes, la fente axiale du manchon d'étanchéité pourvue des moyens d'étanchéité se trouve également dans une région du manchon de serrage fermé par sa paroi. A part la fenêtre 327, le manchon d'étanchéité 320 peut être analogue à celui que divulgue le document WO 2006/109002.

De même que sur les variantes des figures précédentes, bien que l'on ait décrit deux organes de retenue 332A et 332B servant à la retenue des deux tubes, on pourrait prévoir que seul l'un des tubes ait une surface de retenue pouvant coopérer, au choix du sens de montage, avec l'un ou l'autre de ces deux organes de retenue, ou bien on pourrait prévoir que le manchon de serrage ne comporte qu'un seul organe de retenue, par exemple du type décrit en référence à la figure 9.

On relève que les ergots de retenue 332A et 332B sont formés à partir de découpes arrondies, et présentent donc des surfaces de came pouvant coopérer avec les surfaces de retenue pour permettre un démontage par une rotation relative entre le manchon de serrage et les tubes.

Dans l'une quelconque des variantes qui ont été décrites, on peut prévoir que le dispositif d'accouplement comporte un repère externe révélateur de la position de l'organe de retenue. Ainsi, on voit sur la figure 1 que le manchon de serrage 10 présente deux repères 15A et 15B à ses extrémités axiales. Ces repères sont axialement alignés avec la position des organes de retenue 32A et 32B, étant rappelé que cette position est déterminée une fois que le manchon d'étanchéité est à l'intérieur du manchon de serrage, le manchon d'étanchéité étant calé en rotation dans le manchon de serrage 10 ainsi qu'il a été décrit. Ceci permet, lorsque l'on emmanche les tubes dans les dispositifs, d'aligner les perçages 1A et 2A respectivement avec les repères 15A et 15B pour correctement positionner angulairement les surfaces de retenue par rapport aux organes de retenue et assurer une bonne coopération entre ces éléments.

Les repères peuvent prendre toute forme appropriée, par exemple encoche, bossage, trait de couleur...

Des repères du même type peuvent être prévus dans la variante des figures 7 et 8, en étant alignés axialement avec les perçages 230A et 230B du manchon d'étanchéité.

On a également représenté sur la figure 9 la position de tels repères 315A et 315B, alignés avec les ergots 332A et 332B.

En outre, on peut prévoir que les tubes présentent également des repères externes révélateurs de la position des surfaces de retenue. Ainsi, sur les figures 1 et 2, on a représenté de tels repères, respectivement 5A pour le tube 1 et 5B pour le tube 2. Ces repères sont formés à distance des extrémités des tubes de manière à rester visibles lorsque les tubes sont emmanchés dans le dispositif d'accouplement. Le fait que les repères 5A et 5B soient alignés avec les repères 15A et 15B permet au monteur de s'assurer du positionnement correcte des tubes dans le dispositif. Les repères 5A et 5B peuvent être réalisés de toute manière appropriée par exemple, par des bossages, des renfoncements, ou bien encore des marquages couleur. De tels repères, respectivement 205A et 205B, et 305A et 305B sont également représentés sur les figures 7 et 9.

Dans les différentes variantes qui viennent d'être décrites, les organes de retenue et les surfaces de retenue coopèrent par clipsage ou encliquetage élastique. Plus précisément, dans les variantes des figures 1 à 6 et 9, les organes de retenue portés par le manchon d'étanchéité ou par le manchon de serrage s'effacent élastiquement pour permettre l'insertion des tubes (ou d'au moins un tube) dans le dispositif d'accouplement et reprennent leur forme libre pour être retenus contre les surfaces de retenue. Dans la variante des figures 7 et 8, ce sont les surfaces de retenue portées par les tubes qui s'effacent élastiquement lors de l'insertion des tubes (ou d'un tube) dans le dispositif d'accouplement pour revenir ensuite s'accrocher dans les ouvertures que forment les organes de retenue.

## Revendications

1. Dispositif d'accouplement pour l'accouplement étanche de deux tubes alignés (1,2 ; 201, 202 ; 301, 302), le dispositif comprenant un manchon d'étanchéité (20 ; 120 ; 220 ; 320) susceptible d'être disposé autour des extrémités en regard des deux tubes, et un manchon de serrage (10 ; 310) dans lequel s'étend le manchon d'étanchéité, l'un des éléments comprenant le manchon d'étanchéité (20 ; 120 ; 220 ; 320) et le manchon de serrage (10 ; 310) présente au moins un organe de retenue (32A, 32B ; 132A, 132B ; 232A, 232B ; 332A, 332B) apte à coopérer en retenue axiale à l'intérieur du manchon de serrage avec une surface de retenue (1'A, 2'A ; 201'A, 202'A ; 301'A, 302'A) de l'un des tubes recouverte par le manchon de serrage, **caractérisé en ce que** l'organe de retenue (32A, 32B ; 132A, 132B ; 232A, 232B ; 332A, 332B) présente une surface de came apte à coopérer avec la surface de retenue (1'A, 2'A ; 201'A, 202'A ; 301'A, 302'A) lors d'un mouvement relatif de rotation entre le tube (1, 2 ; 201, 202 ; 301, 302) qui présente ladite surface de retenue et ledit un des éléments qui présente l'organe de retenue, dans un sens tendant au désengagement de la retenue axiale.

2. Dispositif selon la revendication 1, **caractérisé en ce que** le manchon d'étanchéité (20 ; 120 ; 220 ; 320) présente deux agencements d'étanchéité (24, 22A ; 24', 22B) espacés axialement, et **en ce que** l'organe de retenue (32A, 32B ; 132A, 132B ; 232A, 232B ; 332A, 332B) est disposé axialement entre les deux agencements d'étanchéité.

3. Dispositif selon la revendication 1 ou 2, **caractérisé en ce que** l'organe de retenue (32A, 32B ; 132A, 132B ; 232A, 232B) est porté par le manchon d'étanchéité (20 ; 120 ; 220), en étant optionnellement formé en une seule pièce avec ledit manchon d'étanchéité, et est situé dans une zone dudit manchon d'étanchéité qui est recouverte par le manchon de serrage (10).

4. Dispositif selon la revendication 1 ou 2, **caractérisé en ce que** l'organe de retenue (332A, 332B) est rapporté à l'intérieur du manchon de serrage (310) et traverse une fenêtre (327) du manchon d'étanchéité (320).

5. Dispositif selon l'une quelconque des revendications 1 à 4, **caractérisé en ce que** l'organe de retenue comprend un ergot (32A, 32B ; 132A, 132B ; 332A, 332B) qui s'étend à l'intérieur dudit manchon d'étanchéité (20 ; 120 ; 320), cet ergot présentant optionnellement une surface (32'A, 32'B), axialement convexe.

6. Dispositif selon l'une quelconque des revendications 1 à 5, **caractérisé en ce que** le manchon d'étanchéité (20 ; 120) présente au moins une patte interne (30A, 30B ; 130A, 130B), décalée radialement vers l'intérieur par rapport à une paroi du manchon d'étanchéité (20 ; 120), en délimitant avec ladite paroi un espacement radial (E).

7. Dispositif selon la revendication 6, **caractérisé en ce que** la patte interne (30A, 30B ; 130A, 130B) porte un ergot de retenue (32A, 32B ; 132A, 132B) en saillie vers l'extérieur, ledit ergot de retenue étant optionnellement découpé dans la patte interne.

8. Dispositif selon la revendication 6 ou 7, **caractérisé en ce que** la patte interne (30A, 30B ; 130A, 130B) est découpée dans une paroi du manchon d'étanchéité (20 ; 120) et repliée vers l'intérieur.

9. Dispositif selon l'une quelconque des revendications 1 à 8, **caractérisé en ce qu'**il présente au moins une surface de butée (30'A, 30'B ; 130'A, 130'B ; 233; 330'A, 330'B) pour l'extrémité de l'un des tubes (1, 2).

10. Dispositif selon la revendication 9, prise en combinaison avec l'une quelconque des revendications 6 à 8, **caractérisé en ce que** la surface de butée (30'A, 30'B ; 130'A, 130'B) est formée à la base de la patte interne (30A, 30B ; 130A, 130B) opposée à son extrémité libre.

11. Dispositif selon l'une quelconque des revendications 1 à 10, **caractérisé en ce qu'**il comporte un repère externe (15A, 15B ; 315A, 315B) révélateur de la position de l'organe de retenue.

12. Dispositif selon l'une quelconque des revendications 1 à 11, **caractérisé en ce que** ledit élément (20, 120 ; 220 ; 310) qui présente l'organe de retenue (32A, 32B ; 132A, 132B ; 232A, 232B ; 332A, 332B) présente deux organes de retenue espacés axialement.

13. Dispositif selon l'une quelconque des revendications 1 à 12, **caractérisé en ce que** le manchon d'étanchéité (20, 120 ; 220 ; 320) est de type ouvert et présente deux extrémités en regard reliées entre elles via deux agencements d'étanchéité espacés axialement.

14. Dispositif selon la revendication 13, **caractérisé en ce que** chacun des deux agencements d'étanchéité (22A, 22B) comprend deux surfaces de contact, respectivement situées sur le bord d'une languette (22) et sur le bord (24, 24') d'une encoche.

15. Ensemble d'accouplement de tubes, comprenant un dispositif d'accouplement selon l'une quelconque des revendications 1 à 14 et au moins un premier tube (1 ; 201 ; 301) destiné à être aligné avec un deuxième tube (2 ; 202 ; 302) pour être accouplé avec lui par le dispositif d'accouplement, et dans lequel le premier tube présente une surface de retenue (1'A ; 201'A ; 301'A) apte à coopérer avec l'organe de retenue (32A ; 132A ; 232A ; 332A) à l'intérieur du manchon de serrage (10 ; 310).

16. Ensemble selon la revendication 15, dans lequel la surface de retenue (1'A) est formée sur un bord d'un renfoncement formé en creux sur la surface interne du premier tube (1), ou sur un bord d'un perçage (1A) du premier tube.

17. Ensemble selon la revendication 15 ou 16, dans lequel le dispositif d'accouplement est selon la revendication 6 et dans lequel l'épaisseur du premier tube (1) est reçue dans ledit espacement radial (E).

18. Ensemble selon la revendication 15, **caractérisé en ce que** l'organe de retenue (232A, 232B) est formé au bord d'un perçage (230A, 230B) du manchon d'étanchéité (220) et **en ce que** la surface de retenue (201'A) est formée en saillie sur la surface externe du premier tube (201).

19. Ensemble selon l'une quelconque des revendications 15 à 18, dans lequel le dispositif d'accouplement est selon la revendication 12, et comprenant en outre le deuxième tube (2; 202; 302), dans lequel les premier et deuxième tubes présentent chacun une surface de retenue (1'A, 2'A; 201'A, 202'A; 301'A, 302'A) apte à coopérer respectivement avec l'un des organes de retenue.

20. Ensemble selon l'une quelconque des revendications 15 à 19, **caractérisé en ce que** au moins l'un des premier et deuxième tubes (1, 2: 201, 202; 301, 302) présente un repère externe (5A, 5B; 205A, 205B; 305A, 305B) révélateur de la position de la surface de retenue.

## Patentansprüche

1. Kupplungsvorrichtung zum dichten Kuppeln von zwei fluchtenden Rohren (1,2; 201, 202; 301, 302), wobei die Vorrichtung eine Dichtungshülse (20; 120; 220; 320) umfasst, die geeignet ist, um die gegenüberliegenden Enden der beiden Rohre angeordnet zu werden, und eine Klemmhülse (10; 310), in der sich die Dichtungshülse erstreckt, eines der Elemente, das die Dichtungshülse (20; 120; 220; 320) und die Klemmhülse (10; 310) umfasst, wenigstens ein Halteorgan (32A, 32B; 132A, 132B; 232A, 232B; 332A, 332B) aufweist, das geeignet ist, innerhalb der Klemmhülse mit einer durch die Klemmhülse abgedeckten Haltefläche (1'A, 2'A; 201'A, 202'A; 301'A, 302'A) von einem der Rohre axial haltend zusammenzuwirken, **dadurch gekennzeichnet, dass** das Halteorgan (32A, 32B; 132A, 132B; 232A, 232B; 332A, 332B) eine Nockenfläche aufweist, die geeignet ist, bei einer relativen Drehbewegung zwischen dem Rohr (1, 2; 201, 202; 301, 302), das die Haltefläche aufweist, und dem einen der Elemente, das das Halteorgan aufweist, mit der Haltefläche (1'A, 2'A; 201'A, 202'A; 301' A, 302'A) in einer Richtung zusammenzuwirken, die darauf abzielt, den axialen Halt zu lösen.

2. Vorrichtung nach Anspruch 1, **dadurch gekennzeichnet, dass** die Dichtungshülse (20; 120; 220; 320) zwei axial beabstandete Dichtungsanordnungen (24, 22A; 24', 22B) aufweist, und dass das Halteorgan (32A, 32B; 132A, 132B; 232A, 232B; 332A, 332B) axial zwischen den beiden Dichtungsanordnungen angeordnet ist.

3. Vorrichtung nach Anspruch 1 oder 2, **dadurch gekennzeichnet, dass** das Halteorgan (32A, 32B; 132A, 132B; 232A, 232B) von der Dichtungshülse (20; 120; 220) getragen ist und dabei optional mit der Dichtungshülse einstückig ausgebildet ist, und sich in einem Bereich der Dichtungshülse befindet, der durch die Klemmhülse (10) abgedeckt ist.

4. Vorrichtung nach Anspruch 1 oder 2, **dadurch gekennzeichnet, dass** das Halteorgan (332A, 332B) an der Innenseite der Spannhülse (310) angesetzt ist und ein Fenster (327) der Dichtungshülse (320) durchgreift.

5. Vorrichtung nach einem der Ansprüche 1 bis 4, **dadurch gekennzeichnet, dass** das Halteorgan eine Nase (32A, 32B; 132A, 132B; 332A, 332B) umfasst, die sich innerhalb der Dichtungshülse (20; 120; 320) erstreckt, wobei diese Nase optional eine Oberfläche (32'A, 32'B) aufweist, die axial konvex ist.

6. Vorrichtung nach einem der Ansprüche 1 bis 5, **dadurch gekennzeichnet, dass** die Dichtungshülse (20; 120) wenigstens eine Innenlasche (30A, 30B; 130A, 130B) aufweist, die gegenüber einer Wand der Dichtungshülse (20; 120), unter Begrenzen eines radialen Zwischenraums (E) mit der Wand, radial nach innen versetzt ist.

7. Vorrichtung nach Anspruch 6, **dadurch gekennzeichnet, dass** die Innenlasche (30A, 30B; 130A, 130B) eine nach außen vorstehende Haltenase (32A, 32B; 132A, 132B) trägt, wobei die Haltenase optional aus der Innenlasche ausgeschnitten ist.

8. Vorrichtung nach Anspruch 6 oder 7, **dadurch gekennzeichnet, dass** die Innenlasche (30A, 30B; 130A, 130B) aus einer Wand der Dichtungshülse (20; 120) ausgeschnitten und nach innen gebogen ist.

9. Vorrichtung nach einem der Ansprüche 1 bis 8, **dadurch gekennzeichnet, dass** sie wenigstens eine Anschlagfläche (30'A, 30'B; 130'A, 130'B; 233; 330'A, 330'B) für das Ende von einem der Rohre (1, 2) aufweist.

10. Vorrichtung nach Anspruch 9, in Kombination mit einem der Ansprüche 6 bis 8, **dadurch gekennzeichnet, dass** die Anschlagfläche (30'A, 30'B; 130'A, 130'B) an der Basis der Innenlasche (30A, 30B; 130A, 130B) gegenüber ihrem freien Ende ausgebildet ist.

11. Vorrichtung nach einem der Ansprüche 1 bis 10, **dadurch gekennzeichnet, dass** sie eine äußere Markierung (15A, 15B; 315A, 315B) umfasst, welche Aufschluss über die Position des Halteorgans gibt.

12. Vorrichtung nach einem der Ansprüche 1 bis 11, **dadurch gekennzeichnet, dass** das Element (20, 120; 220; 310), welches das Halteorgan (32A, 32B; 132A, 132B; 232A, 232B; 332A, 332B) aufweist, zwei axial beabstandete Halteorgane aufweist.

13. Vorrichtung nach einem der Ansprüche 1 bis 12, **dadurch gekennzeichnet, dass** die Dichtungshülse (20, 120; 220; 320) vom offenen Typ ist und zwei gegenüberliegende Enden aufweist, die über zwei axial beabstandete Dichtungsanordnungen miteinander verbunden sind.

14. Vorrichtung nach Anspruch 13, **dadurch gekennzeichnet, dass** eine jede der beiden Dichtungsanordnungen (22A, 22B) zwei Kontaktflächen aufweist, die an dem Rand einer Zunge (22) bzw. an dem Rand (24, 24') einer Einkerbung gelegen sind.

15. Anordnung zur Kupplung von Rohren, umfassend eine Kupplungsvorrichtung nach einem der Ansprüche 1 bis 14 und wenigstens ein erstes Rohr (1; 201; 301), das dazu bestimmt ist, mit einem zweiten Rohr (2; 202; 302) ausgerichtet zu werden, um mit ihm durch die Kupplungsvorrichtung gekuppelt zu werden, und wobei das erste Rohr eine Haltefläche (1'A; 201'A; 301'A) aufweist, die geeignet ist, mit dem Halteorgan (32A; 132A; 232A; 332A) innerhalb der Klemmhülse (10; 310) zusammenzuwirken.

16. Anordnung nach Anspruch 15, bei der die Haltefläche (1'A) an einem Rand einer Vertiefung, die an der Innenfläche des ersten Rohres (1) vertieft gebildet ist, oder an einem Rand einer Bohrung (1A) des ersten Rohres ausgebildet ist.

17. Anordnung nach Anspruch 15 oder 16, bei der die Kupplungsvorrichtung nach Anspruch 6 ist und die Dicke des ersten Rohres (1) in dem radialen Zwischenraum (E) aufgenommen ist.

18. Anordnung nach Anspruch 15, **dadurch gekennzeichnet, dass** das Halteorgan (232A, 232B) am Rand einer Bohrung (230A, 230B) der Dichtungshülse (220) ausgebildet ist und dass die Haltefläche (201'A) an der Außenfläche des ersten Rohres (201) vorstehend ausgebildet ist.

19. Anordnung nach einem der Ansprüche 15 bis 18, bei der die Kupplungsvorrichtung nach Anspruch 12 ist und die ferner das zweite Rohr (2; 202; 302) umfasst, wobei das erste und das zweite Rohr jeweils eine Haltefläche (1'A, 2'A; 201'A, 202'A; 301'A, 302'A) aufweisen, die geeignet ist, jeweils mit einem der Halteorgane zusammenzuwirken.

20. Anordnung nach einem der Ansprüche 15 bis 19, **dadurch gekennzeichnet, dass** wenigstens eines der ersten und zweiten Rohre (1, 2: 201, 202; 301, 302) eine äußere Markierung (5A, 5B; 205A, 205B; 305A, 305B) aufweist, welche Aufschluss über die Position der Haltefläche gibt.

## Claims

1. A coupling device for coupling together two aligned tubes (1, 2; 201, 202; 301, 302) in sealed manner, the device comprising a sealing sleeve (20; 120; 220; 320) suitable for being disposed around the facing ends of the two tubes, and a clamping sleeve (10; 310) inside which the sealing sleeve extends, one of the elements comprising the sealing sleeve (20; 120; 220; 320) and by the clamping sleeve (10; 310) has at least one retaining member (32A, 32B; 132A, 132B; 232A, 232B; 332A, 332B) suitable for co-operating in axial retention inside the clamping sleeve with a retaining surface (1'A, 2'A; 201'A, 202'A; 301'A, and 302'A) of one of the tubes, which retaining surface is covered by the clamping sleeve **characterized in that** the retaining member (32A, 32B; 132A, 132B; 232A, 232B; 332A, 332B) has a cam surface suitable for co-operating with the retaining surface (1'A, 2'A; 201'A, 202'A; 301'A, 302'A) while the tube (1, 2; 201, 202; 301, 302) that has said retaining surface and said one of the elements that has the retaining member are being moved in rotation relative to each other, in a direction tending to disengage the axial retention.

2. A device according to claim 1, **characterized in that** the sealing sleeve (20; 120; 220; 320) has two sealing arrangements (24, 22A; 24', 22B) that are spaced apart axially, and **in that** the retaining member (32A, 32B; 132A, 132B; 232A, 232B; 332A, 332B) is disposed axially between the two sealing arrangements.

3. A device according to claim 1 or 2, **characterized in that** the retaining member (32A, 32B; 132A, 132B; 232A, 232B) is carried by the sealing sleeve (20; 120; 220), optionally by being formed integrally with said sealing sleeve, and is situated in a region of said sealing sleeve that is covered by the clamping sleeve (10).

4. A device according to claim 1 or 2, **characterized in that** the retaining member (332A, 332B) is mounted inside the clamping sleeve (310) and passes through a window (327) in the sealing sleeve (320).

5. A device according to any one of claims 1 to 4, **characterized in that** the retaining member comprises a catch (32A, 32B; 132A, 132B; 332A, 332B) that extends inside said sealing sleeve (20; 120; 320), said catch optionally having a surface (32'A, 32'B) that is axially convex.

6. A device according to any one of claims 1 to 5, **characterized in that** the sealing sleeve (20; 120) has at least one internal tab (30A, 30B; 130A, 130B) that is offset radially inwards relative to a wall of the sealing sleeve (20; 120), thereby defining radial spacing (E) with said wall.

7. A device according to claim 6, **characterized in that** the internal tab (30A, 30B; 130A, 130B) carries a retaining catch (32A, 32B; 132A, 132B) that projects outwards, said retaining catch optionally being cut out from the internal tab.

8. A device according to claim 6 or claim 7, **characterized in that** the internal tab (30A, 30B; 130A, 130B) is cut out from a wall of the sealing sleeve (20; 120) and is folded back inwards.

9. A device according to any one of claims 1 to 8, **characterized in that** it has at least one abutment surface (30'A, 30'B; 130'A, 130'B; 233; 330'A, 330'B) for the end of one of the tubes 1, 2.

10. A device according to claim 9, taken in combination with any one of claims 6 to 8, **characterized in that** the abutment surface (30'A, 30'B; 130'A, 130'B) is formed at the base of the internal tab (30A, 30B; 130A, 130B), which base is opposite from its free end.

11. A device according to any one of claims 1 to 10, **characterized in that** it has an external marker (15A, 15B; 315A, 315B) indicating the position of the retaining member.

12. A device according to any one of claims 1 to 11, **characterized in that** said element (20, 120; 220; 310) that has the retaining member (32A, 32B; 132A, 132B; 232A, 232B; 332A, 332B) has two retaining members that are spaced apart axially.

13. A device according to any one of claims 1 to 12, **characterized in that** the sealing sleeve (20, 120; 220; 320) is of the open type and has two facing ends connected together via two sealing arrangements that are spaced apart axially.

14. A device according to claim 13, **characterized in that** each of the two sealing arrangements (22A, 22B) has two contact surfaces, respectively situated on the edge of a tongue (22) and on the edge (24, 24') of a notch.

15. A tube coupling assembly comprising a coupling device according to any one of claims 1 to 14 and at least a first tube (1; 201; 301) that is to be aligned with a second tube (2; 202; 302) so as to be coupled to it via the coupling device, and wherein the first tube has a retaining surface (1'A; 201'A; 301'A) suitable for co-operating with the retaining member (32A; 132A; 232A; 332A) inside the clamping sleeve (10; 310).

16. An assembly according to claim 15, wherein the retaining surface (1'A) is formed on an edge of a setback formed set back from the inside surface of the first tube (1), or on an edge of a hole (1A) in the first tube.

17. An assembly according to claim 15 or claim 16, wherein the coupling device is according to claim 6, and wherein the thickness of the first tube (1) is received in said radial spacing (E).

18. An assembly according to claim 15, **characterized in that** the retaining member (232A, 232B) is formed at the edge of a hole (230A, 230B) in the sealing sleeve (220), and **in that** the retaining surface (201'A) is formed projecting relative to the outside surface of the first tube (201).

19. An assembly according to any one of claims 15 to 18, wherein the coupling device is according to claim 12, and said assembly further comprises the second tube (2; 202; 302), and wherein each of the first and second tubes has a retaining surface (1'A, 2'A; 201'A, 202'A; 301'A, 302'A) suitable for co-operating with a respective one of the retaining members.

20. An assembly according to any one of claims 15 to 19, **characterized in that** at least one of the first and second tubes (1, 2: 201, 202; 301, 302) has an external marker (5A, 5B; 205A, 205B; 305A, 305B) indicating the position of the retaining surface.
